# EUROPEAN PATENT APPLICATION

(11) **EP 4 826 476 A1**
(43) Date of publication of application: **21.10.2026**
(21) Application number: 26169546.4
(22) Date of filing: 31.03.2026
(51) Int. Cl.: G05B 19/4097, B24C 1/04, B26F 3/00

(54) **METHOD OF GENERATING WATER JET MACHINING PROGRAM USING COMPUTER**

(30) Priority: 15.04.2025 JP 2025066995
(71) Applicant: Sugino Machine Limited, Namerikawa City, Toyama 936-8577 (JP)
(72) Inventor: KOYANAGI, Mami, Namerikawa City, Toyama, 9368577 (JP); SUGIMORI, Tadashi, Namerikawa City, Toyama, 9368577 (JP); MATSUI, Taiki, Namerikawa City, Toyama, 9368577 (JP); MITSUE, Toyoaki, Namerikawa City, Toyama, 9368577 (JP)
(74) Representative: Global IP Europe Patentanwaltskanzlei

(57) **Abstract**

A method for calculating a nozzle path using a computer is provided. A method of generating a machining program includes: receiving, by a computer (71), inputs of a nozzle (15), an ejection environment, ejection conditions, and a model of a workpiece (51); generating, by the computer (71), a jet tool model (41) having a three-dimensional shape of a removal region (57) in which a liquid jet (31) ejected from the nozzle (15) has a removal capability with respect to the workpiece (51) based on the nozzle (15), the ejection environment, and the ejection conditions; and generating, by the computer (71), a nozzle path for removing the workpiece (51) by using the jet tool model (41).

## Description

### BACKGROUND

### 1. Technical Field

The present invention relates to a method of generating a water jet machining program using a computer.

### 2. Description of the Background

There is known a method in which abrasives are suspended in a processing liquid, a workpiece that has been additively manufactured is placed in a region of the processing liquid in which the abrasives are suspended, the workpiece including a support surface having a support structure for fixing the workpiece to a build platform, and a nozzle submerged in the processing liquid ejects a cavitation jet of the processing liquid toward the workpiece to remove the support structure adhering to the workpiece (see JP 2025-001177 A).

Further, there is known a precision shape cutting method for water jet cutting in which position control for cut width compensation, correction of inclination of a cut surface, and attitude control of a nozzle axis for cutting delay compensation are combined in parallel (see JP H04-069198 A).

### BRIEF SUMMARY

When machining a workpiece using a liquid jet with a jet apparatus including a numerical control device, an operator estimates machining results that vary depending on machining conditions, calculates a movement path of a nozzle (a nozzle path), and generates a nozzle operation program. However, in order to generate a nozzle path that achieves a desired machining time and machining result, advanced skill is required.

An object of the present invention is to provide a method that enables calculation of a nozzle path using a computer even by a non-skilled operator.

A first aspect of the present invention provides a method of generating a machining program, the method including:
receiving, by a computer, inputs of a nozzle, an ejection environment, ejection conditions, and a model of a workpiece;
generating, by the computer, a jet tool model having a three-dimensional shape of a removal region in which a liquid jet ejected from the nozzle has a removal capability with respect to the workpiece based on the nozzle, the ejection environment, and the ejection conditions; and
generating, by the computer, a nozzle path for removing the workpiece by using the jet tool model.

The workpiece is freely selectable. The workpiece may be, for example, an additively manufactured product. In the case of an additively manufactured product, the present invention is suitable for removal of a support portion. A removal range is a portion of the workpiece that is removed by collision with a liquid jet (water jet). The computer outputs a machining program based on shape data of the workpiece.

The nozzle ejects a water jet. The nozzle may be specified by a nozzle type and a nozzle diameter. The nozzle type may be, for example, a straight type having a jet outlet on a distal end surface of a rod-shaped nozzle, or an L-shaped type having a jet outlet on a side peripheral surface of a rod-shaped nozzle. The nozzle may be attached to a machining apparatus on which the workpiece is placed.

The ejection environment is an environment related to ejection of the water jet. The ejection environment may be, for example, whether the nozzle and the workpiece are arranged in air or immersed in a liquid.

The ejection conditions are physical properties related to the ejected water jet. The ejection conditions may include, for example, a pressure of the ejected liquid, a type of abrasives contained therein, and a mixing ratio thereof.

The ejection conditions may include, for example, a collision time during which the liquid jet continues to collide with a unit area of a surface of the workpiece. As the collision time increases, a removal range of the workpiece may increase.

The ejection conditions may include, for example, a number of passes of the nozzle and a feed speed of the nozzle. When the nozzle passes a specific portion of the workpiece a plurality of times, the removal range may increase. Depending on a difference in feed speed of the nozzle, the removal range when the water jet passes may vary.

A shape and dimensions of the removal range may be the same as a shape and dimensions of the jet tool model. In this case, dimensions of the jet tool model may change depending on the collision time or the number of passes.

The jet tool model is modeled as a cutting tool shape in a range in which the water jet has a removal capability with respect to the workpiece. The jet tool model is determined based on physical properties of the workpiece, the nozzle, the ejection environment, and the ejection conditions.

The jet tool model may have a cylindrical shape. In this case, a length of the jet tool model may be defined as a tool length, and a diameter of the jet tool model may be defined as a tool diameter. The jet tool model may have a conical shape or a fan shape that diffuses as a distance from the jet outlet increases. In the workpiece, a portion that comes into contact with the jet tool model and is actually removed is defined as a removal range. The removal range is generated based on the jet tool model.

For example, when cutting a thick material using a liquid jet containing abrasives (abrasive water jet), a cutting width varies. Specifically, when a feed speed of the nozzle is low, a cutting width on a surface through which the jet passes out (rear surface) becomes wider than a cutting width on a surface on which the jet collides (front surface). As the feed speed of the nozzle increases, the cutting width on the rear surface becomes narrower. The cutting width on the front surface is substantially the same as a diameter of the jet outlet (abrasive nozzle). At a specific speed, the cutting width on the rear surface becomes equal to the cutting width on the front surface. When the cutting speed is further increased, the cutting width on the rear surface becomes smaller than that on the front surface. In such a case, a diameter of the jet tool model may be changed according to the change in cutting width.

Further, when a thickness of the workpiece is large and a cutting speed is increased, a delay occurs until the liquid jet reaches the rear surface. As a result, a cutting delay occurs in which an arcuate cutting mark appears that progresses in a direction opposite to a cutting direction from the front surface toward the rear surface. In this case, a shape cut by the jet is represented by an arcuate shape curved in a direction opposite to a traveling direction from the front surface. In this case, the jet tool model may be curved and have a wire-like shape having a circular cross section. When the cutting width becomes narrower toward the rear surface, a diameter thereof may also become smaller.

There is a machining method (cavitation abrasive surface finishing, CASF method) in which a workpiece and a nozzle are immersed in a liquid (for example, water) containing abrasives, and a jet having a large number of cavitations (cavitation jet) is caused to collide. When removal processing is performed by a CASF method using a linear rod-shaped jet, an actually removed region (removal region) becomes a cylindrical shape larger than a nozzle diameter due to spreading of the jet and entrainment of the abrasives. A length of the removal region may be determined based on an ejection pressure, the workpiece, a type of the abrasives, a particle size of the abrasives, a distance from the jet outlet to the workpiece (standoff distance), and a collision time per unit collision area.

A shape and dimensions (for example, a tool length and a tool diameter) of the jet tool model may be determined based on experimental results or empirical formulas.

The jet tool model can be applied to cutting CAM (Computer Aided Manufacturing) or a simulator to generate a machining program based on the jet tool model.

Three-dimensional CAD data of the workpiece may be read into the computer. In the three-dimensional CAD data, a removal region, which is a region to be removed from the workpiece, may be selected. The computer may generate a nozzle path for removing the selected removal region.

Alternatively, a collision path, which is a path along which the liquid jet collides with the workpiece, may be selected. The computer may generate a nozzle path according to the collision path.

According to the present invention, even a non-skilled operator can calculate a nozzle path using a computer.

### BRIEF DESCRIPTION OF DRAWINGS

FIG. 1 is a perspective view illustrating a method of removing a removal region of a workpiece according to a first embodiment.
FIG. 2 is a cross-sectional view illustrating a jet tool model when removing the removal region shown in FIG. 1.
FIG. 3 is a cross-sectional view illustrating an initial process of removing the removal region shown in FIG. 1.
FIG. 4 is a cross-sectional view illustrating an intermediate process of removing the removal region shown in FIG. 1.
FIG. 5 is a block diagram illustrating a computer for generating a machining program according to the first embodiment.
FIG. 6 is a flowchart illustrating a method of generating a machining program according to the first embodiment.
FIG. 7 shows an example of a machining history database.
FIG. 8 is an example of a screen display when a machining program is simulated by a computer.
FIG. 9 is a perspective view illustrating a method of removing a collision path of a workpiece according to a second embodiment.
FIG. 10 is a flowchart illustrating a method of generating a machining program according to the second embodiment.
FIG. 11 is a perspective view of a conical jet tool model.
FIG. 12 is a cross-sectional view of a jet tool model when a feed speed of a nozzle is low.
FIG. 13 is a cross-sectional view of a jet tool model when a feed speed of a nozzle is high.
FIG. 14 is a cross-sectional view of a jet tool model corresponding to a cutting delay condition.

### DETAILED DESCRIPTION

### First Embodiment

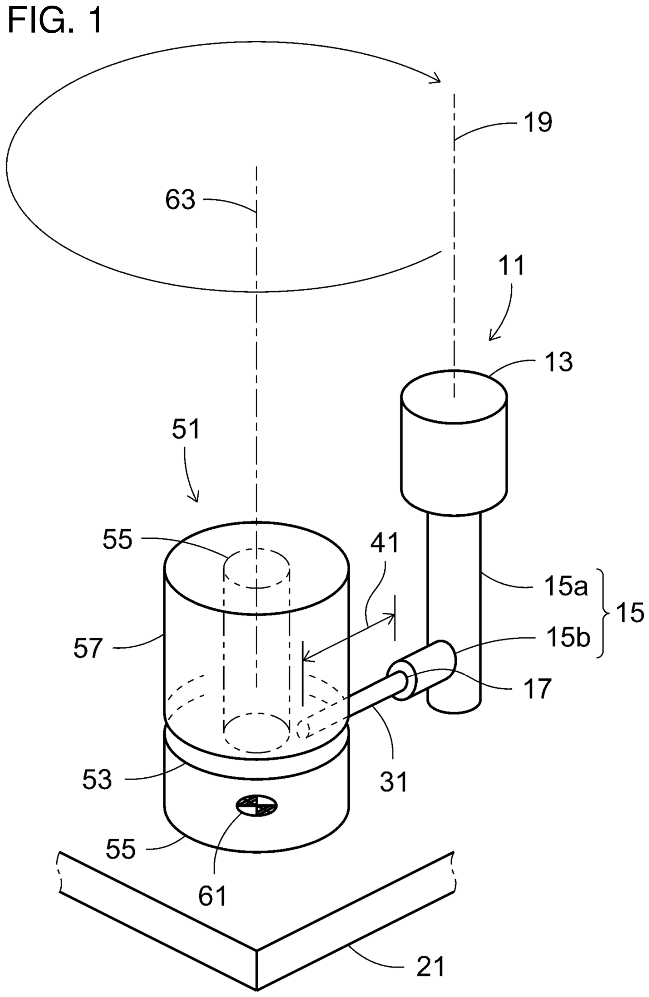

As shown in FIGS. 1 to 8, a method of generating a machining program according to the present embodiment is applicable when removing a removal region 57 of a workpiece 51 using a water jet 31. The removal region 57 is removed by a machining apparatus 11. The machining apparatus 11 is controlled by a machining program. The machining program is generated by a computer 71.

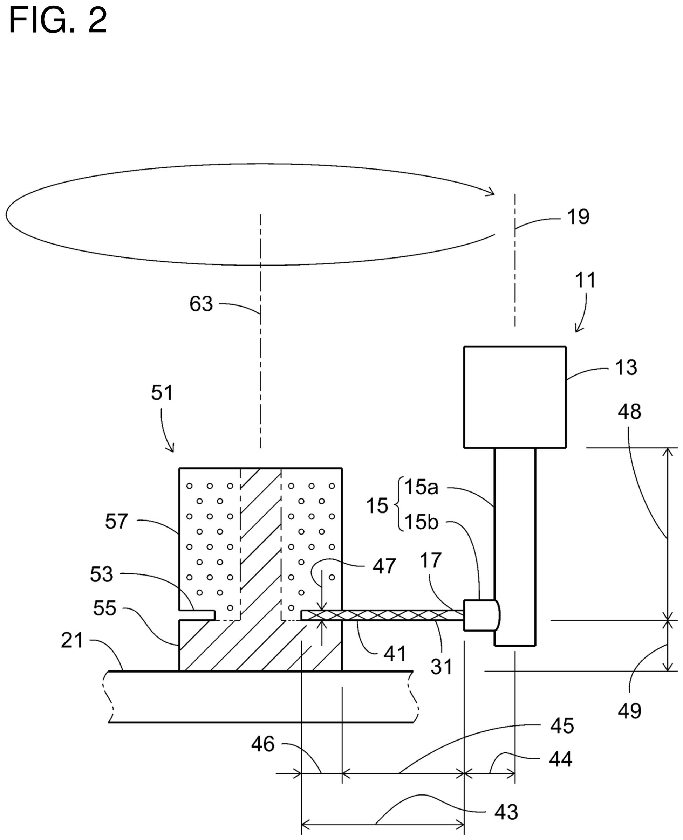

The machining apparatus 11 includes a head 13, a nozzle 15, and a table 21. The head 13 is movable freely around the workpiece 51. The nozzle 15 is fixed to the head 13. The head 13 may be incorporated into a robot arm. The nozzle 15 may be detachable from the head 13. The nozzle 15 includes a shaft portion 15a and a projecting portion 15b. The nozzle 15 is L-shaped. The shaft portion 15a, which is arranged coaxially with the head 13, extends in a vertical direction in FIG. 2. The projecting portion 15b projects in a direction orthogonal to a peripheral surface of the shaft portion 15a. The projecting portion 15b has a jet outlet 17 at a distal end surface. The jet outlet 17 ejects the water jet 31. The water jet 31 is supplied from the head 13. The head 13 and the nozzle 15 are rotatable about an axis 19. The workpiece 51 is placed on the table 21.

The workpiece 51 shown in FIG. 1 has a cylindrical shape. The workpiece 51 is fixed to the table 21. A center line 63 is a reference line passing through a center of the workpiece 51. The workpiece 51 includes a product portion 55 and a removal region 57. The product portion 55 has a T-shaped cross section including a flange on a side of the table 21. The removal region 57 is a region to be removed by the water jet 31. The removal region 57 has a cylindrical shape. An intersection between an upper surface of the table 21 and the center line 63 is defined as a machining origin 61. The machining origin 61 is a reference point during machining. The workpiece 51 may be immersed in a processing liquid. Abrasives may be mixed in the processing liquid.

The machining program controls movement of the head 13 and ejection of the water jet 31. During machining, the head 13 revolves around the workpiece 51 about the center line 63. The head 13 rotates such that the jet outlet 17 always faces the workpiece 51. The water jet 31 is ejected at a predetermined pressure. A portion removed from the workpiece 51 by the water jet 31 becomes a removal range 53.

As shown in FIG. 2, the water jet 31 ejected toward the workpiece 51 forms the removal range 53. The removal range 53 is formed based on the machining program. The machining program is generated based on a jet tool model 41. The jet tool model 41 defines a range in which the water jet 31 has a removal capability with respect to the workpiece 51. The jet tool model 41 shown in FIG. 2 models the water jet 31 as a cylindrical cutting tool shape. The jet tool model 41 shown in FIG. 2 has an inherent tool length 43 and an inherent tool diameter 47. The tool length 43 is defined with the jet outlet 17 as an origin. The tool diameter 47 is constant over an entire range of the tool length 43. The removal range 53 is a portion removed by contact with the jet tool model 41. The jet tool model 41 varies depending on physical properties of the workpiece 51. The jet tool model 41 may be determined in consideration of a feed speed and a number of passes of the water jet 31. A region away from the jet tool model 41 in the water jet 31 does not have a removal capability for the workpiece 51. The jet tool model 41 is used to generate the machining program.

An offset amount 44 is a distance from the axis 19 to the jet outlet 17. A standoff distance 45 is a length from the jet outlet 17 to a surface of the workpiece 51. A cut depth 46 is a removal depth of the workpiece 51. A finishing allowance 49 is a distance from the upper surface of the table 21 to the jet outlet 17. A nozzle height 48 is a distance from a boundary surface between the head 13 and the nozzle 15 to the jet outlet 17. These distance data are used when generating the machining program.

An ejection pressure of the water jet 31 may be sequentially varied according to a situation of a removal operation. For example, when the jet tool model 41 approaches the product portion 55, the ejection pressure may be temporarily set to be lower to avoid influence on the product portion 55. At this time, the jet tool model 41 may be temporarily changed. Conversely, when it is desired to remove the removal region 57 quickly, the ejection pressure may be temporarily set to be higher to enhance removal capability. Similarly, a feed speed of the water jet 31 may be sequentially varied according to the situation of the removal operation.

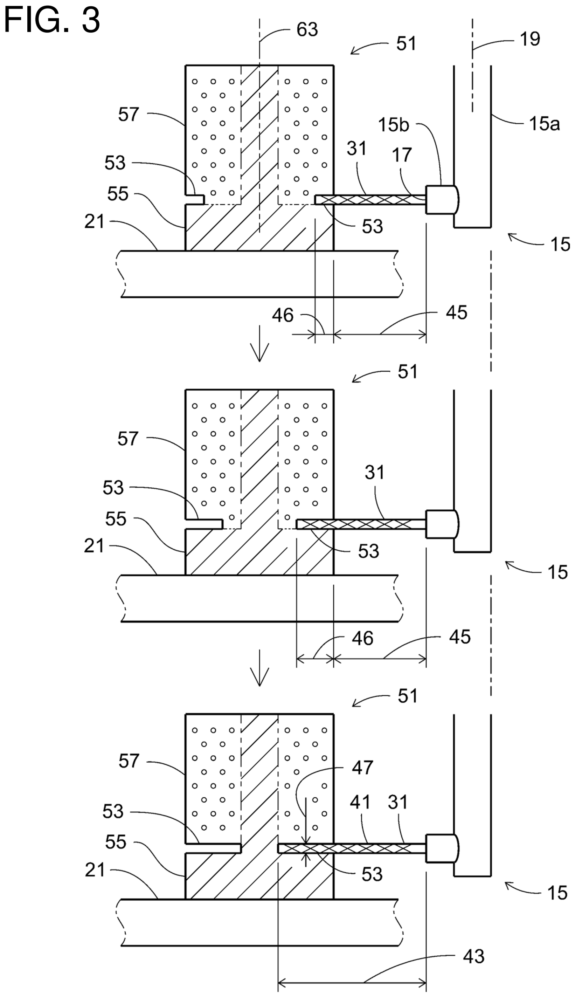

As shown in FIG. 3, the removal range 53 expands depending on a number of passes of the water jet 31 (jet tool model 41). The nozzle 15 revolves around the workpiece 51 about the center line 63. A revolution radius of the nozzle 15 is constant. The removal range 53 becomes deeper as the number of passes of the water jet 31 increases. In FIG. 3, the number of passes of the water jet 31 increases from top to bottom. A lower view in FIG. 3 illustrates a state in which the water jet 31 has passed three times. At this time, a deepest portion of the removal range 53 reaches the product portion 55. In this state, a sum of the standoff distance 45 and the cut depth 46 corresponds to the tool length 43.

When the removal range 53 reaches a predetermined depth, the nozzle 15 is raised by an amount corresponding to the tool diameter 47. Thereafter, the nozzle 15 newly removes a portion adjacent to the removal range 53. By repeatedly raising the nozzle 15, the removal range 53 is expanded.

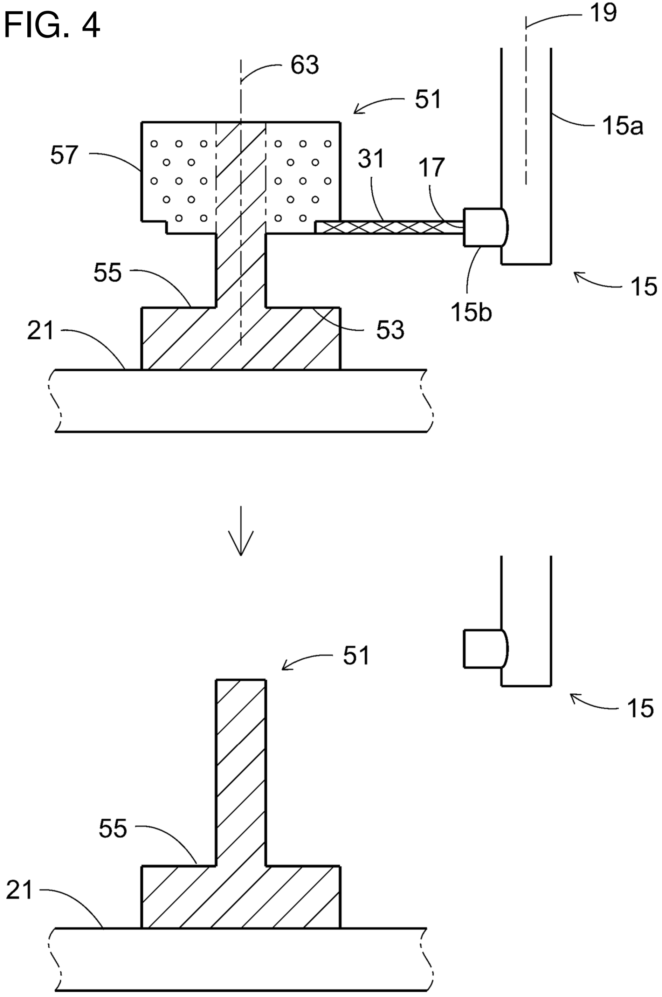

FIG. 4 illustrates an intermediate process in which the nozzle 15 is raised stepwise to remove the removal region 57. As the nozzle 15 is raised, the removal range 53 expands. Ultimately, the removal region 57 is completely removed, and only the product portion 55 remains on the table 21. A machining program for realizing this operation includes a circumferential movement command for the nozzle 15 and a raising command for the nozzle 15.

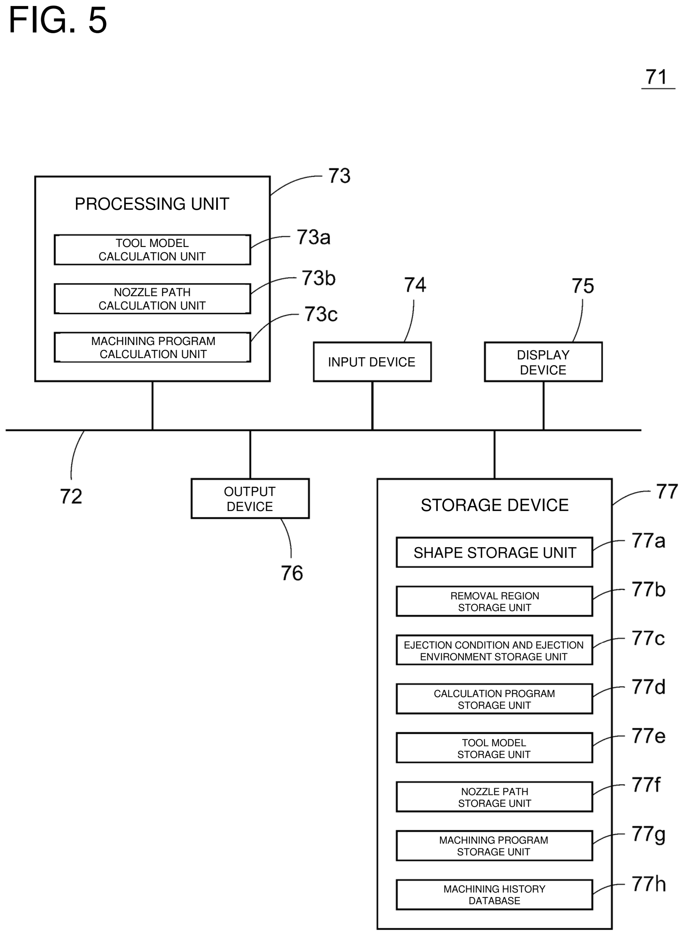

As shown in FIG. 5, the computer 71 includes a bus 72, a processing unit 73, an input device 74, a display device 75, an output device 76, and a storage device 77. The storage device 77 includes a shape storage unit 77a, a removal region storage unit 77b, an ejection condition and ejection environment storage unit 77c, a calculation program storage unit 77d, a tool model storage unit 77e, a nozzle path storage unit 77f, a machining program storage unit 77g, and a machining history database 77h.

The shape storage unit 77a stores three-dimensional CAD data of the workpiece 51. The removal region storage unit 77b stores the removal region 57 of the workpiece 51. The ejection condition and ejection environment storage unit 77c stores data related to ejection of the water jet 31 and an environment thereof. The calculation program storage unit 77d stores programs for performing calculations. The tool model storage unit 77e stores data in which the water jet 31 is modeled as a cutting tool shape based on the jet tool model 41. The nozzle path storage unit 77f stores a calculated nozzle path. The nozzle path may include data related to a feed speed of the nozzle 15 and a number of passes with respect to the workpiece 51. The machining program storage unit 77g stores a machining program for numerically controlling the machining apparatus 11. The machining history database 77h stores past machining results in order to improve accuracy when generating the jet tool model 41 and the nozzle path.

The processing unit 73 reads data and programs stored in the storage device 77, performs calculations, and writes calculation results into the storage device 77. The processing unit 73 includes a tool model calculation unit 73a, a nozzle path calculation unit 73b, and a machining program calculation unit 73c.

The tool model calculation unit 73a calculates the jet tool model 41. The jet tool model 41 is configured by modeling the water jet 31 as a cutting tool shape based on the ejection condition and ejection environment storage unit 77c and the like, and includes data relating to a shape and a size thereof. The nozzle path calculation unit 73b calculates a nozzle path for removing the removal region 57 based on the shape storage unit 77a, the removal region storage unit 77b, the ejection condition and ejection environment storage unit 77c, and the tool model storage unit 77e. The nozzle path calculation unit 73b writes the calculated nozzle path into the nozzle path storage unit 77f. The nozzle path calculation unit 73b may calculate a feed speed of the nozzle 15 and a number of passes with respect to the workpiece 51. The machining program calculation unit 73c generates a machining program readable by the machining apparatus 11 based on data stored in the nozzle path storage unit 77f. The generated machining program is stored in the machining program storage unit 77g.

During calculation, the processing unit 73 may refer to the machining history database 77h. The bus 72 connects respective devices constituting the computer 71.

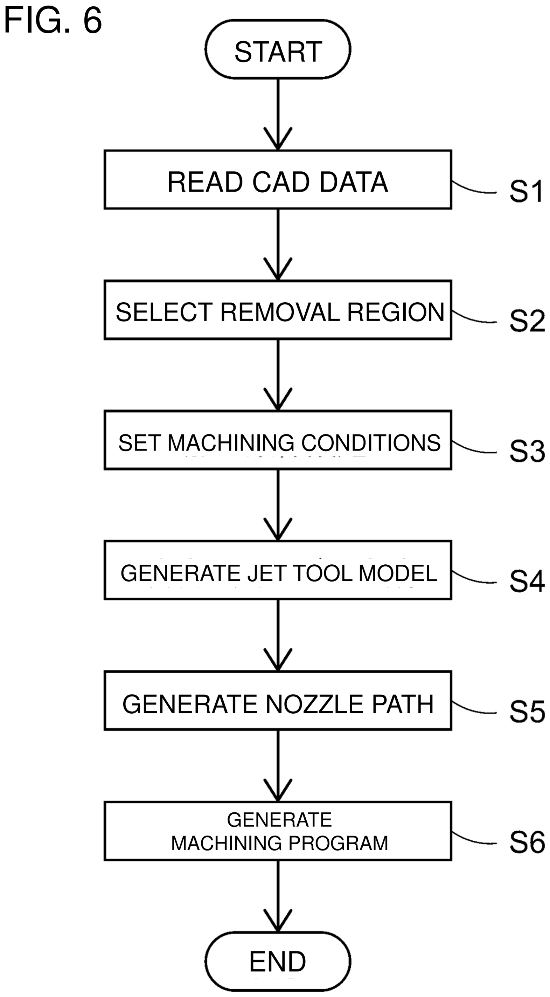

A method of generating a water jet machining program will be described with reference to FIG. 6.

In step S1, the computer 71 reads three-dimensional CAD data of the workpiece 51 via the input device 74. Reading of the CAD data may be performed by freely selecting a mode such as connecting an external memory or via a network.

In step S2, the computer 71 receives input of the removal region 57 of the workpiece 51. The removal region 57 is input to the computer 71 by an operator via the display device 75 and the input device 74.

In step S3, the computer 71 receives setting of machining conditions. The machining conditions may include a type of the nozzle 15 for ejecting the water jet 31, an ejection environment or ejection conditions of the water jet 31. The machining conditions may include a material of the workpiece 51.

In step S4, the computer 71 generates the jet tool model 41 based on data from steps S1 to S3. The jet tool model 41 may include data of the tool length 43 and the tool diameter 47.

In step S5, the computer 71 generates a nozzle path based on data from steps S1 to S4. Specifically, the computer 71 generates parameters such as the standoff distance 45, a feed speed of the water jet 31, and a number of passes of the water jet 31.

In step S6, the computer 71 generates a machining program for controlling the machining apparatus 11. The machining program is generated based on the nozzle path. The machining program is output toward the machining apparatus 11 via the output device 76. Step S6 has a function as a cutting CAM.

In the present invention, as a plurality of data such as physical properties of the workpiece 51, a nozzle type, an ejection environment, and ejection conditions are utilized, accuracy of the jet tool model 41 is improved. The nozzle path can be automatically generated by the computer 71 based on the jet tool model 41. Accordingly, even a non-skilled operator can generate the nozzle path. By referring to the machining history database 77h, accuracy of the jet tool model 41 is further improved.

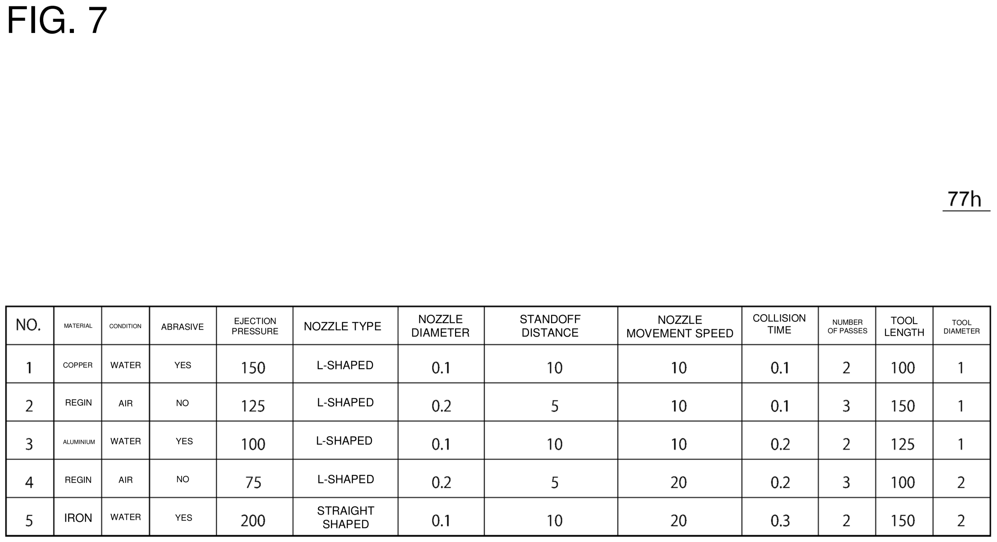

FIG. 7 illustrates an example of the machining history database 77h. The machining history database 77h includes, for example, material, conditions, abrasive, ejection pressure, nozzle type, nozzle diameter, standoff distance, nozzle movement speed, collision time, number of passes, tool length, and tool diameter.

In the machining history database 77h, a material of the workpiece 51 is registered. Data such as hardness may be added to the material. When the workpiece 51 is an additively manufactured product, arrangement data of support portions may be added. In the machining history database 77h, machining conditions such as whether the water jet 31 is ejected in a liquid or in air are registered. In the machining history database 77h, presence or absence of an abrasive is registered. In the machining history database 77h, a type and a content of the abrasive may be registered. In the machining history database 77h, data relating to a shape and dimensions of the nozzle 15 are registered as a nozzle type. In the machining history database 77h, the standoff distance 45 is registered. In the machining history database 77h, a collision time, which is a time during which collision of the water jet 31 with a surface per unit area of the workpiece 51 continues, is registered. In the machining history database 77h, a number of passes, which is a number of times the nozzle 15 passes with respect to the workpiece 51, is registered. In the machining history database 77h, the tool length 43, which is a length of a range in which the water jet 31 has a removal capability with respect to the workpiece 51, is registered. In the machining history database 77h, the tool diameter 47, which is a diameter of a range in which the water jet 31 has a removal capability with respect to the workpiece 51, is registered. The tool length 43 and the tool diameter 47 may be values based on an empirical formula. When generating a new jet tool model 41, similar data may be extracted from the accumulated machining history database 77h, and the tool length 43 and the tool diameter 47 may be reused.

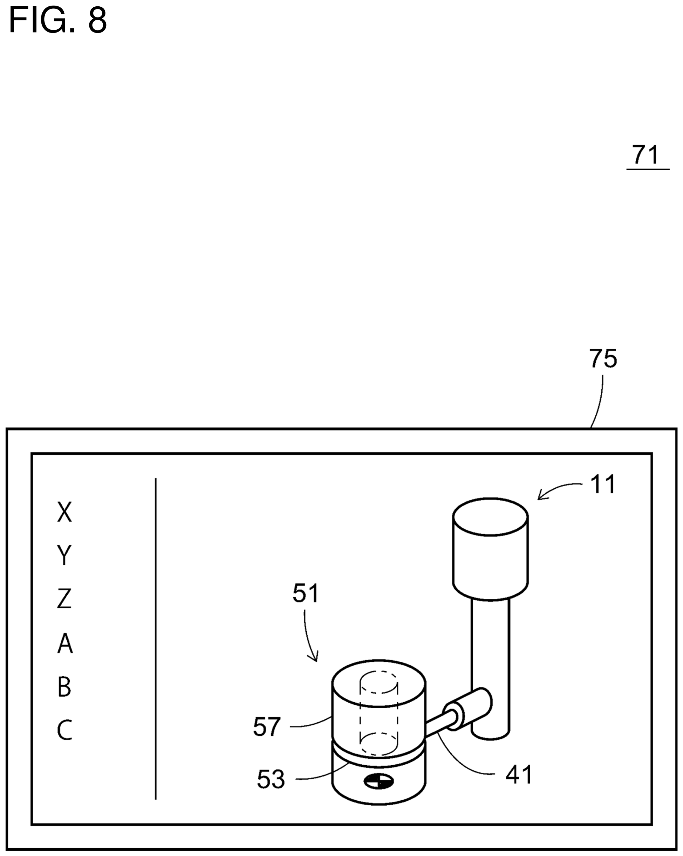

FIG. 8 illustrates an example of a screen display when the generated machining program is simulated by the computer 71. The computer 71 executes simulation software. The simulation software reads three-dimensional CAD data of the workpiece 51 and the generated machining program. Based on the jet tool model 41, the water jet 31 is displayed by modeling a range having removal capability as a cutting tool shape. The simulation software displays the workpiece 51 and the machining apparatus 11 on the display device 75. Prior to actual machining, a process of removing the removal region 57 can be confirmed as a moving image.

### Second Embodiment

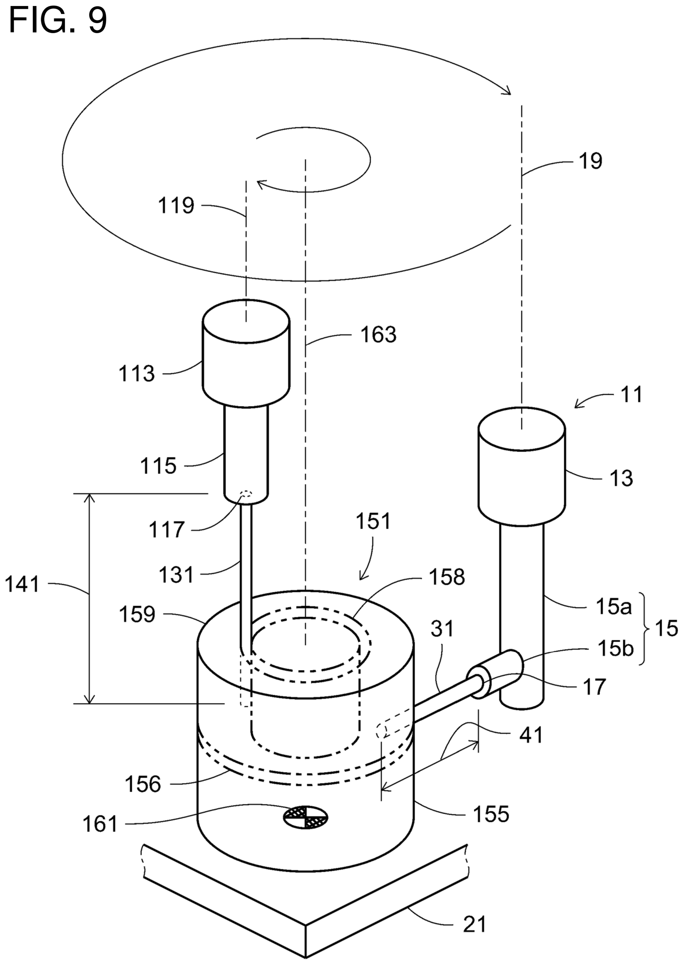

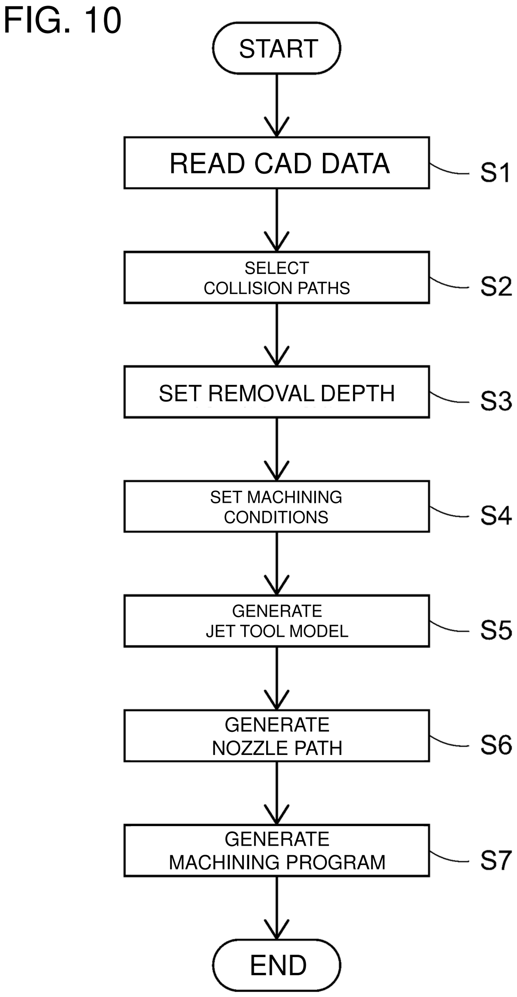

As shown in FIGS. 9 and 10, a method of generating a machining program according to the present embodiment generates a nozzle path along which water jets 31 and 131 pass through collision paths 156 and 158. The collision paths 156 and 158 are paths along which the water jets 31 and 131 collide with a workpiece 151, respectively. When generating the machining program, the computer 71 reads three-dimensional CAD data of the workpiece 151. Next, the computer 71 specifies the collision paths 156 and 158 with respect to the CAD data of the workpiece 151. At this time, a removal depth for removing the workpiece 151 may also be specified.

In FIG. 9, two types of nozzles 15 and 115 are used to locally remove a side peripheral surface and an upper end surface of the workpiece 151. Similarly to the first embodiment, the nozzle 15 is L-shaped in which a projecting portion 15b projects from a shaft portion 15a. The nozzle 15 revolves around the workpiece 151 and ejects the water jet 31 toward the collision path 156. Removal by the water jet 31 proceeds such that the water jet 31 removes the workpiece 151 from the side peripheral surface until the water jet 31 intersects the collision path 158. As in the first embodiment, a feed speed and a number of passes of the water jet 31 are determined based on machining conditions and the like.

The nozzle 115 ejects the water jet 131 toward the collision path 158 on the upper end surface of the workpiece 151. The collision path 158 has a circular shape concentric with a center line 163. The nozzle 115 is attached to a head 113. The nozzle 115 has a straight shape extending along an axis 119 of the head 113. The water jet 131 is ejected along the axis 119. The head 113 revolves around the center line 163 along the collision path 158. When both the collision path 156 and the collision path 158 reach a target depth, an unnecessary portion 159 is separated.

When generating the machining program, the computer 71 generates jet tool models 41 and 141 for each of the two types of nozzles 15 and 115. Accordingly, depths when removing the collision paths 156 and 158 can be managed. When a cutting CAM is used, the computer 71 can generate the machining program based on the jet tool models 41 and 141. The two types of nozzles 15 and 115 may be operated with a time difference. The heads 13 and 113 may be exchangeable. In this case, the nozzles 15 and 115 may be exchanged during machining. In order to prevent movement of the unnecessary portion 159, removal processing may be ended at a stage immediately before the unnecessary portion 159 is separated.

With reference to FIG. 10, a method of generating a machining program in which the water jet 31 passes through the collision paths 156 and 158 will be described. In step S1, the computer 71 reads three-dimensional CAD data of the workpiece 151 via the input device 74.

In step S2, the computer 71 receives input of the collision paths 156 and 158 of the workpiece 151.

In step S3, the computer 71 receives input of a removal depth for each of the collision paths 156 and 158.

In step S4, the computer 71 receives setting of machining conditions.

In step S5, the computer 71 generates the jet tool models 41 and 141 based on data from steps S1 to S4.

In step S6, the computer 71 generates nozzle paths based on data from steps S1 to S5. Specifically, the computer 71 calculates the standoff distance 45, feed speeds of the nozzles 15 and 115, and numbers of passes of the nozzles 15 and 115, and generates paths (nozzle paths) through which tip points of the nozzles 15 and 115 pass.

In step S7, the computer 71 generates a machining program for controlling the machining apparatus 11.

Steps after step S3 are the same as those in the first embodiment.

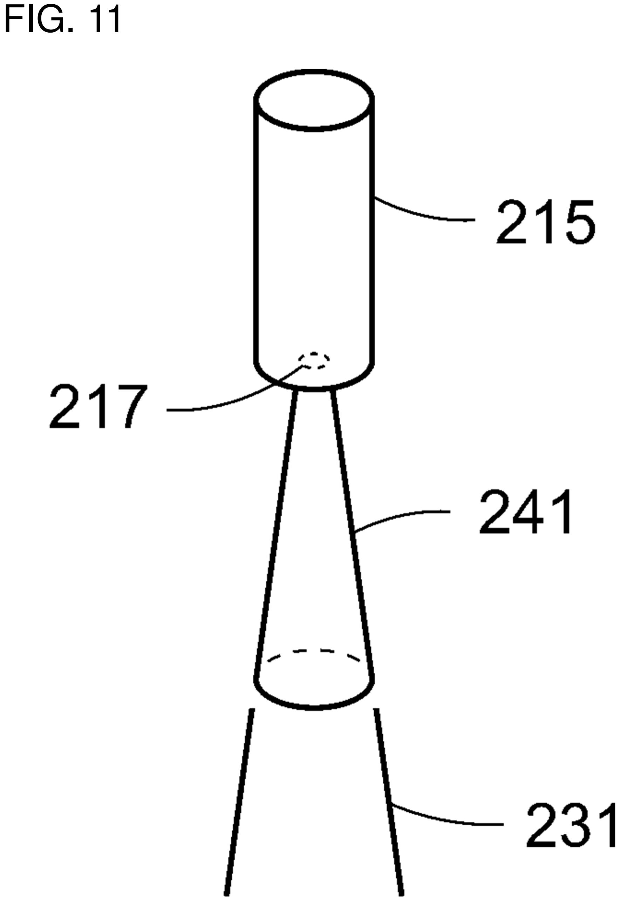

FIGS. 11 to 14 illustrate examples of shapes of jet tool models 241, 341, and 441.

In FIG. 11, the water jet 231 diffuses in a conical manner as a distance from the nozzle 215 increases. The jet tool model 241 has a conical shape having the jet outlet 217 as an apex.

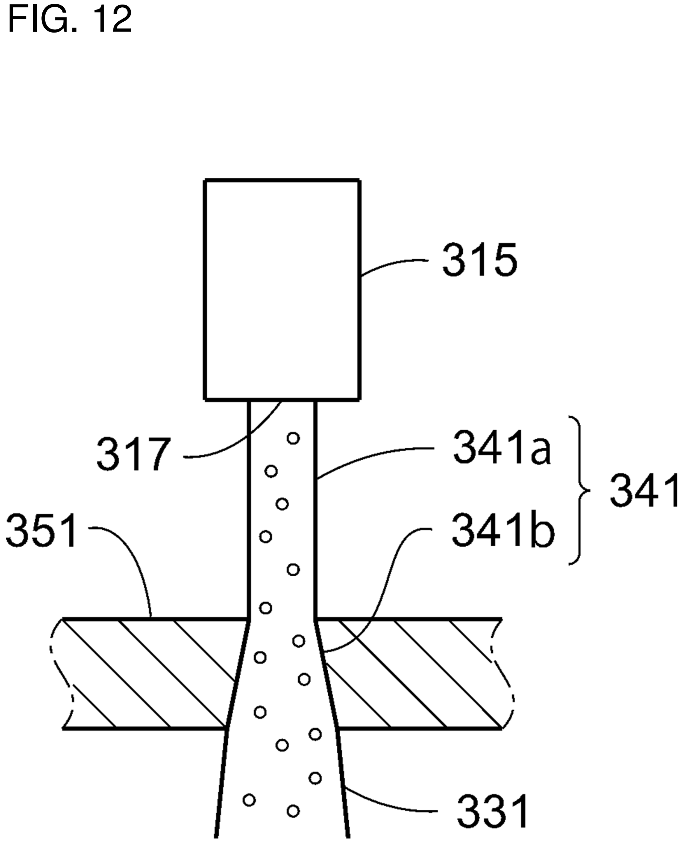

FIG. 12 illustrates an example in which a thick workpiece 351 is cut by a water jet (abrasive water jet) 331 containing abrasives. The nozzle 315 moves while maintaining a constant distance from the workpiece 351. In this case, the jet tool model 341 varies depending on a feed speed of the nozzle 315. When the feed speed of the nozzle 315 is low, a width of a cut portion increases from a front surface toward a rear surface of the workpiece 351 (from an upper side to a lower side in FIG. 12). The jet tool model 341 includes a jet tool model 341a and a jet tool model 341b. The jet tool model 341a is a model of a section from the jet outlet 317 to the workpiece 351. The jet tool model 341a has a cylindrical shape. The jet tool model 341b is a model of a section passing through the workpiece 351. The jet tool model 341b may include a conical portion that expands on a downstream side.

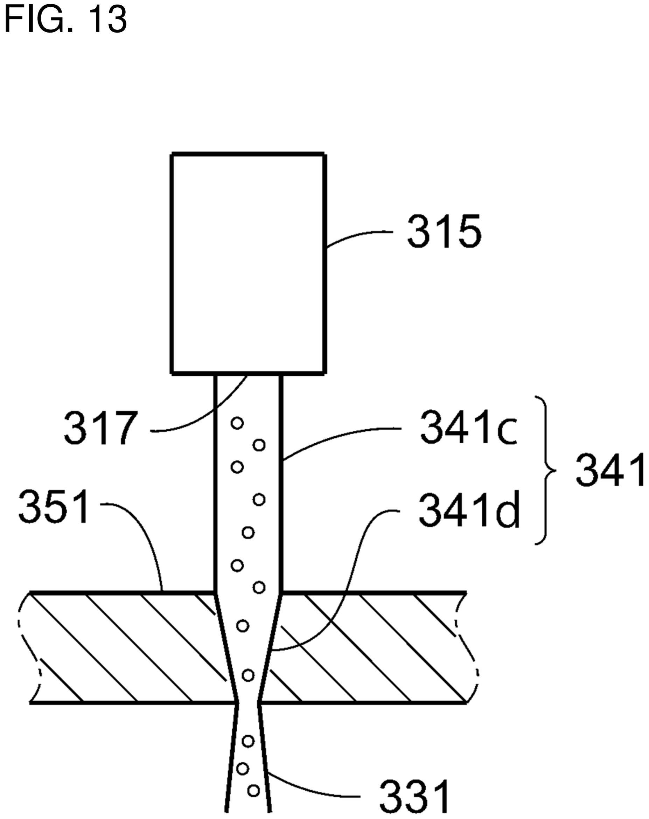

FIG. 13 illustrates the jet tool model 341 when the feed speed of the nozzle 315 is high. In this case, the width of the cut portion decreases from the front surface toward the rear surface of the workpiece 351. The jet tool model 341 includes a jet tool model 341c and a jet tool model 341d. The jet tool model 341c is a model of a section from the jet outlet 317 to the workpiece 351. The jet tool model 341c has a cylindrical shape. The jet tool model 341d is a model of a section passing through the workpiece 351. The jet tool model 341d may include a conical portion having a diameter that decreases toward a distal end.

As shown in FIGS. 12 and 13, when generating the jet tool model 341, a thickness of the workpiece 351 and a feed speed of the nozzle 315 may be taken into consideration.

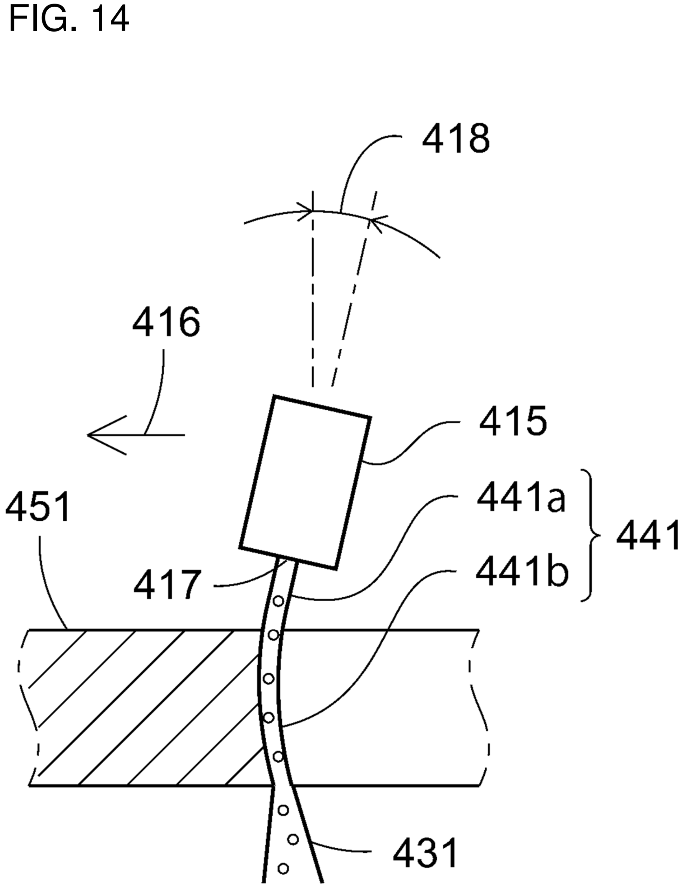

FIG. 14 illustrates a state in which the nozzle 415 is moved in an inclined posture in order to cope with a cutting delay of the water jet 431 accompanying movement of the nozzle 415. An arrow 416 in FIG. 14 indicates a moving direction of the nozzle 415.

When the workpiece 451 is thick and the feed speed of the nozzle 415 is high, a cut portion may become arcuate due to an arrival delay of the water jet 431. Accordingly, the nozzle 415 may be arranged to have an inclination angle 418 with respect to a normal line of a surface of the workpiece 451, thereby suppressing shape deterioration of the cut portion. The jet tool model 441 includes a jet tool model 441a and a jet tool model 441b. The jet tool model 441a is a model of a section from the jet outlet 417 to the workpiece 451. The jet tool model 441a has a linear shape. The jet tool model 441b is a model of a section passing through the workpiece 451. The jet tool model 441b has a curved shape. The jet tool model 441 includes data relating to the feed speed of the nozzle 415 and the inclination angle 418. The jet tool model 441 is used in a state in which rotation of the nozzle 415 is not involved.

The present invention is not limited to the embodiments described above, and various modifications can be made without departing from the gist of the present invention. All technical matters included in the technical idea described in the appended claims are included in the present invention. Although the embodiments described above illustrate preferred examples, those skilled in the art can realize various alternatives, modifications, variations, or improvements based on the disclosure of the present specification, and these are included within the technical scope defined by the appended claims.

### Reference Signs List

15, 115, 215, 315, 415 Nozzle
31, 131, 231, 331, 431 Water jet (liquid jet)
41, 141, 241, 341, 441 Jet tool model
51, 151, 351, 451 Workpiece
53 Removal range
57 Removal region
71 Computer

## Claims

1. A method of generating a machining program, the method comprising:
receiving, by a computer (71), inputs of a nozzle (15, 115, 215, 315, 415), an ejection environment, ejection conditions, and a model of a workpiece (51);
generating, by the computer (71), a jet tool model (41, 141, 241, 341, 441) having a three-dimensional shape of a removal region (57) in which a liquid jet (31, 131, 231, 331, 431) ejected from the nozzle (15, 115, 215, 315, 415) has a removal capability with respect to the workpiece (51) based on the nozzle (15, 115, 215, 315, 415), the ejection environment, and the ejection conditions; and
generating, by the computer (71), a nozzle path for removing the workpiece (51) by using the jet tool model (41, 141, 241, 341, 441).

2. The method of generating the machining program according to claim 1, wherein
the jet tool model (41, 141, 241, 341) has a shape of solid of rotation about an ejection axis.

3. The method of generating the machining program according to claim 1 or 2, wherein
the jet tool model (41, 141, 241, 341, 441) is applied to cutting CAM as a tool shape.

4. The method of generating the machining program according to any one of claims 1 to 3, wherein
the computer (71) generates the jet tool model (41, 141, 241, 341, 441) based on a nozzle type and a nozzle diameter of the nozzle (15, 115, 215, 315, 415).

5. The method of generating the machining program according to any one of claims 1 to 4, wherein
the computer (71) receives, as the ejection environment, whether the nozzle (15, 115, 215, 315, 415) is arranged in air or immersed in a liquid.

6. The method of generating the machining program according to any one of claims 1 to 5, wherein
the computer (71) receives, as the ejection conditions, a pressure of a liquid ejected from the nozzle (15, 115, 215, 315, 415).

7. The method of generating the machining program according to any one of claims 1 to 6, wherein
the computer (71) receives, as the ejection environment, whether the workpiece (51) is immersed in a liquid in which abrasives are mixed, and
the computer (71) receives, as the ejection conditions, a type of the abrasives.

8. The method of generating the machining program according to any one of claims 1 to 7, wherein
the computer (71) receives, as the ejection conditions, a collision time in which the liquid jet (31, 131, 231, 331, 431) collides with a unit area of a surface of the workpiece (51).

9. The method of generating the machining program according to claim 8, wherein
the computer (71) calculates the collision time based on a number of passes of the nozzle (15, 115, 215, 315, 415) and a feed speed of the nozzle (15, 115, 215, 315, 415).

10. The method of generating the machining program according to any one of claims 1 to 9, wherein
the computer (71) reads three-dimensional CAD data of the workpiece (51),
the computer (71) receives, in the three-dimensional CAD data, input of the removal region (57) or collision paths (156, 158) along which the liquid jet (31, 131, 231, 331, 431) collides with the workpiece (51), and
the computer (71) generates a water jet machining program corresponding to the removal region (57) or the collision paths (156, 158).

11. The method of generating the machining program according to claim 10, wherein
the computer (71) reads the three-dimensional CAD data and the water jet machining program,
the computer (71) calculates movement coordinates of the nozzle (15, 115, 215, 315, 415) with respect to execution time when executing the water jet machining program, and
the computer (71) displays the movement coordinates on a display device.
